# EUROPEAN PATENT SPECIFICATION

(11) **EP 2 615 154 B1**
(45) Date of publication and mention of the grant of the patent: **26.04.2017**
(21) Application number: 11823317.0
(22) Date of filing: 04.07.2011
(51) Int. Cl.: C09K 11/08, C09K 11/64, H01L 33/50

(54) **METHOD FOR PRODUCING TYPE ß-SIALON**
VERFAHREN ZUR HERSTELLUNG VON BETA-SIALON
PROCÉDÉ DE PRODUCTION DE SIALON DE TYPE ß

(30) Priority: 09.09.2010 JP 2010202512
(43) Date of publication of application: 17.07.2013
(73) Proprietor: Denka Company Limited, Tokyo 103-8338 (JP)
(72) Inventor: TAKEDA Go, Machida-city Tokyo 194-8560 (JP); HASHIMOTO Hisayuki, Machida-city Tokyo 194-8560 (JP); EMOTO Hideyuki, Machida-city Tokyo 194-8560 (JP); YAMADA Suzuya, Machida-city Tokyo 194-8560 (JP)
(74) Representative: Gulde & Partner
(86) International application number: PCT/JP2011/065281
(87) International publication number: WO 2012/032838

(56) References cited:
- EP-A1- 1 884 552
- EP-A1- 1 964 905
- EP-A1- 2 213 711
- WO-A1-2008/062781
- WO-A1-2011/058919
- JP-A- 2005 255 895
- JP-A- 2008 127 547

## Description

### Technical Field

The present invention relates to a method of manufacturing β-SiAlON available for luminescent devices such as white light emitting diodes using blue light emitting diode chips or ultraviolet light emitting diode chips.

### Background Art

In Patent Literature 1, β-SiAlON produced in a first heat treatment step is subjected to acid treatment in the second heat treatment step to improve its crystallinity, thereby enhancing its brightness.

Patent Literature 2 discloses that reduction in the content of dissolved oxygen in β-SiAlON shortens the wave length and narrows the bandwidth of the fluorescent spectrum of the β-SiAlON.

### Citation List

### Patent Literature

Patent Literature 1: WO 2008/062781
Patent Literature 2: WO 2007/066733

### Non-patent Literature

Non-patent Literature 1: Kazuaki Okubo et al., Measurement of quantum efficiency of NBS standard phosphors, Journal of the Illuminating Engineering Institute of Japan, Vol. 83, No. 2, pp.87-93, 1999.

### Summary of Invention

### Solution to Problem

The luminescent efficiency of Eu doped β-SiAlON according to prior art deteriorates considerably when an attempt is made to reduce the wavelength and bandwidth of the fluorescent spectrum thereof and has poor reproducibility of luminescent properties when being manufactured repeatedly under the same conditions.

In view of the problem described above, an object of the present invention is to provide a method of manufacturing β-SiAlON capable of achieving high luminescent efficiency even when the wavelength and bandwidth of the fluorescent spectrum thereof are reduced.

### Means for Solving the Problems

The present invention, which has been attained based on the result of an analysis of the relationship between the composition, average particle size, and optical properties of a powdered material and the characteristics of the obtained β-SiAlON as a phosphor, intends to manufacture β-SiAlON having high fluorescent efficiency and reduced wavelength and bandwidth by controlling the physical properties of the powdered material within a given range.

Namely, the present invention provides a method of manufacturing β-SiAlON represented by a general formula Si_{6-z}Al_{z}O_{z}N_{8-z}: Eu, including a baking step for baking a powdered material, wherein the powder material contains Al content from 0.3 to 1.2 mass%, O content from 0.15 to 1 mass% O/Al molar ratio from 0.9 to 1.3, Si content from 58 to 60 mass%, N content from 37 to 40 mass%, N/Si molar ratio from 1.25 to 1.45, and Eu content from 0.3 to 0.7 mass%; the powdered material is baked in the baking step at temperatures from 1850°C to 2050°C in a nitrogen atmosphere; and the manufactured β-SiAlON satisfies 0.280 ≤ x ≤ 0.340 and 0.630 ≤ y ≤ 0.675 on a CIExy chromaticity coordinate.

According to the present invention, part or all of the powdered material is β-SiAlON. The optical absorbance of the powdered material for 455 nm excitation wavelength is preferably equal to or higher than 40%, and/or the particle size of the powdered material is preferably equal to or larger than 1 µm but not exceeding 12 µm in D50, and equal to or smaller than 20 µm in D90.

The spin density corresponding to absorbance g = 2.00 ± 0.02 obtained by electron spin resonance spectrum measurement on the powdered material at 25°C is preferably equal to or less than 9.0 × 10¹⁷ spins/g.

An annealing step may be added after the baking step. This annealing step is preferably a step wherein heat treatment is performed in vacuum at temperatures from 1200°C to 1550°C, or a step wherein heat treatment is performed in the atmosphere whose main component is any of inert gases other than nitrogen, with nitrogen partial pressure maintained at 10 kPa or lower, at temperatures from 1300°C to 1600°C, or both.

An acid treatment step may be added after the baking step or the annealing step. In the acid treatment step, β-SiAlON is preferably immersed in an aqueous solution of 65°C or higher containing HF and HNO₃.

### Advantageous Effect of Invention

According to the manufacturing method of the present invention, high fluorescent efficiency can be achieved even if the wavelength and bandwidth of the β-SiAlON are reduced.

### Description of Embodiments

Embodiments of the present invention are described below in detail.

The present invention provides a method of manufacturing β-SiAlON represented by a general formula Si_{6-z}Al_{z}O_{z}N_{8-z}: Eu (hereinafter simply referred to as β-SiAlON), including a baking process for baking powdered material, wherein the powdered material contains A1 content from 0.3 to 1.2 mass%, O content from 0.15 to 1 mass%, O/Al molar ratio from 0.9 to 1.3, Si content from 58 to 60 mass%, N content from 37 to 40 mass%, N/Si molar ratio is from 1.25 to 1.45, and Eu content from 0.3 to 0.7 mass%; the powdered material is baked in a nitrogen atmosphere at temperatures from 1850°C to 2050°C in the baking process; and the manufactured β-SiAlON satisfies 0.280 ≤ x ≤ 0.340 and 0.630 ≤ y ≤ 0.675 on a CIExy chromaticity coordinate.

The composition of the powdered material of the present invention is adjusted as follows: Al content is from 0.3 to 1.2 mass%, O content is 0.15 to 1 mass%, O/Al molar ratio is from 0.9 to 1.3, Si content is from 58 to 60 mass%, N content is from 37 to 40 mass%, N/Si molar ratio is from 1.25 to 1.45, and Eu content is from 0.3 to 0.7 mass%.

The Al content of the powdered material is from 0.3 to 1.2 mass%. If Al content of the powdered material is too low, the luminescent efficiency of the β-SiAlON is likely to deteriorate, whereas if Al content is too high, the wavelength and bandwidth are unlikely to be reduced.

The O content of the powdered material is from 0.15 to 1 mass%. If O content of the powdered material is too low, sufficient particle growth does not occur during the baking step, which increases crystal defects, thereby decreasing luminescence efficiency of the β-SiAlON and suppressing reduction in wavelength and bandwidth. If the O content becomes too high, phosphor particles having large aspect ratio and thin short diameter are produced during the baking step, which decreases absorptance and the capacity of Eu, namely light emission center, of converting excitation light to fluorescent light, thereby decreasing the luminescent efficiency of the β-SiAlON. The O/Al molar ratio of the powdered material is from 0.9 to 1.30.

The Si content of the powdered material is from 58 to 60 mass%. If the Si content is too low, the weight is likely to decrease during the baking step, resulting in lower yield, whereas if the Si content is too high, crystal transparency may decrease, thus lowering internal quantum efficiency and the luminescent efficiency of the β-SiAlON.

The N content of the powdered material is from 37 to 40 mass%. The N/Si molar ratio of the powdered material is 1.25 to 1.45. If the N/Si molar ratio is too high, or too low, β-SiAlON close to stoichiometric proportion cannot be produced, and consequently, sufficient luminescent efficiency cannot be obtained.

The Eu content of the powdered material is from 0.3 to 0.7 weight%. If the Eu content is too low, excitation light cannot be converted into green light thoroughly, which degrades luminescent efficiency. In contrast, if the Eu content is too high, insoluble excessive Eu atoms deposit between the particles and absorb part of the excitation light and fluorescent light, thus resulting in deterioration in luminescent efficiency.

In the baking step of the method of manufacturing β-SiAlON of the present invention, the powdered material is baked at temperatures from 1850°C to 2050°C in a nitrogen atmosphere.

The β-SiAlON obtained in the above-mentioned baking step shows fluorescent property satisfying 0.280 ≤ x ≤ 0.340 and 0.630 ≤ y ≤ 0.675 on the CIExy chromaticity coordinate.

In the baking step, the powdered material is packed in a vessel such as a crucible, whose surface that comes into contact with the powdered material, is made of boron nitride, and baked at temperatures from 1850°C to 2050°C in the nitrogen atmosphere. This enables the particles to grow into coarse ones, further improving crystallinity. As a result, Eu exhibits efficient fluorescent emission, allowing luminescent efficiency of the β-SiAlON to be improved, and wavelength and bandwidth to be reduced.

Part or all of the powdered material may be β-SiAlON. In this case, the optical absorptance of the powdered material for 455 nm excitation wavelength is preferably 40% or higher.

The β-SiAlON contained in the powdered material may be manufactured by heat-treating a powdered metal or compound containing an element that is to constitute β-SiAlON to adjust the composition and improve the crystallinity, followed by grinding for adjusting particle size, etc.

The particle size of the powdered material is preferably equal to 1 µm or larger but not exceeding 12 µm in D 50, and/or equal to 20 µm or smaller in D 90. The D 50 and D90 herein indicate 50% and 90% particle sizes, respectively in terms of a volume-based integration fraction. If D50 particle size is too small, rapid particle growth occurs when baking is performed, thus increasing crystal defects and decreasing the luminescent efficiency of the obtained β-SiAlON. In contrast, if D50 particle size is too large, sufficient particle growth does not occur, which inhibits the luminescent efficiency of the baked β-SiAlON from being improved. If D90 particle size is too large, coarse particles that cannot be used as products increase in the baked β-SiAlON, and thus the yield decreases.

Since the particle size of the powdered material of the present invention is larger than the powder used in conventional manufacturing methods, the abundance ratio of the particles unrelated to particle growth in the baking step is high. The poor crystallinity of the powdered material deteriorates the β-SiAlON synthesized by baking, reducing the transparency and fluorescent properties of the crystal. Meanwhile, if powdered multi-crystal β-SiAlON is mixed in the material, the crystallinity of the β-SiAlON produced by baking improves, compared to the case where mono-crystal powder such as a powdered metal or compound only are used.

The spin density corresponding to absorbance g = 2.00 ± 0.02 obtained by electron spin resonance (hereinafter, simply referred to as ESR) measurement on the powdered material at 25°C is preferably equal to or less than 9.0 × 10¹⁷ spins/gram. The higher spin density of the powdered material increases the optical absorption of the obtained β-SiAlON, inhibiting generation of fluorescent light.

An annealing step may be added after the baking step. In this annealing step, the powdered material is heat-treated in vacuum at temperatures from 1200°C to 1550°C, or in the atmosphere whose main components are inert gases other than nitrogen, with nitrogen partial pressure maintained at 10 kPa or lower, at temperatures from 1300°C to 1600°C. The annealing step may be divided into two sub-steps. The heat treatment may be performed in an inert atmosphere before and after the vacuum heat-treatment step.

An acid treatment step may be added after the baking step or the annealing step. In the acid treatment step, β-SiAlON is preferably immersed in an aqueous solution containing HF and HNO₃ at 65°C or higher. For example, the β-SiAlON is acid-treated in the aqueous solution containing HF and HNO₃ at a temperature of 65°C or higher. The acid treatment removes impurities including amorphous substances other than the β-SiAlON crystal and crystals such as Si produced in the baking and annealing steps, thereby further improving the luminescent efficiency.

Examples of the present invention are described below in detail by referring to Table 1.

### Example 1

In the method of manufacturing β-SiAlON according to the embodiment 1 of the present invention, a powdered material, which contains β-SiAlON and has z value calculated from its Al content of 0.1, was baked to manufacture β-SiAlON represented by a general formula Si_{6-z}Al_{z}O_{z}N_{8-z}: Eu. The powdered material according to Example 1 was prepared as follows: Al content; 0.50 mass%, O content; 0.91 mass%, O/Al molar ratio: 1.15, Si content; 59.1 mass%, N content; 38.8 mass%, N/Si molar ratio: 1.32, and Eu content; 0.50 mass%. In the baking step, the powdered material was packed in a vessel made of boron nitride ("N-1" grade, Denki Kagaku Kogyo Kabushiki Kaisha) and baked at 2000°C for 10 hours in a nitrogen atmosphere under the pressure of 0.9 MPa to synthesize β-SiAlON that satisfies 0.280 ≤ x ≤ 0.340 and 0.630 ≤ y ≤ 0.675 on the CIExy chromaticity coordinate.

The D50 and D90 of the powdered material were 6.0 µm and 16.6 µm respectively. The D50 and D90 were measured by the laser diffraction scattering method.

The spin density corresponding to absorbance g = 2.00 ± 0.02 obtained by electron spin resonance spectrum measurement on the powdered material according to Example 1 at 25°C was 6.5 × 10¹⁷ spins/g. The measuring method is described below.

50 mg of the powdered material for phosphor synthesis according to Example 1 was placed in a sample tube for ESR, and the ESR was measured at 25°C using an ESR measuring apparatus (JES-FE2XG, JEOL Ltd.) under the measurement conditions as follows:
Magnetic field sweep range: 3200 to 3400 gauss (320 to 340 mT)
Magnetic field modulation: 100 kHz, 5 gauss
Irradiated microwave: 9.25 GHz of frequency, 10 mW of output
Sweeping time: 240 sec.
Number of data points: 2056 points
Reference material: MgO with Mn²⁺ thermally-diffused. The reference material was measured together with the sample material according to Example 1.

The ESR spectrum, which sensitively observes any unevenness in an electromagnetic absorption spectrum, is generally drawn as a first differential curve. Since the absorption intensity of the ESR spectrum is proportional to the number of unpaired electrons, the ESR spectrum was integrated twice to convert the differential curve to its corresponding integral curve, and quantitative determination was performed based on the ratio of area thereof to that of the reference sample.

The number of unpaired electrons of the reference sample was obtained based on the result of ESR measurement performed using 0.5 mL of 1.0 × 10⁻⁵ mol 1,1-diphenyl-2-pierylhydrazyl ((C₆H₅)₂NNC₆H₂(NO₂)₃, hereinafter simply referred to as DPPH))/L benzene solution (3.0 × 10¹⁵ spins), of which the number of unpaired electrons is known, to determine the peak area ratio between the reference sample and the DPPH solution.

The sintered product obtained in the baking step was loosely-aggregated mass, which could be broken into flakes by hands with clean rubber gloves worn. In this way, after light shredding was performed, the sintered product was sieved using a 45-µm sieve to manufacture sintered β-SiAlON powder.

Powder X-ray diffractometry (XRD) was performed on the sintered powder obtained using Cu Kα ray to identify a crystal layer, and a plurality of fine diffraction lines were found in the β-SiAlON as a crystal phase and around 2θ = 33 to 38° as a second phase. The highest diffraction line intensity in the second phase was 1% or lower of the diffraction line intensity of the 101 surface of the β-SiAlON.

The above-mentioned sintered powder was packed in a cylindrical vessel made of boron nitride and heat-treated at 1450°C under the atmospheric pressure in Ar for eight hours. All of the obtained powder, which was not compressed by the sintering and had almost the same chemical properties as those before heating, passed through the 45 µm sieve. The XRD measurement detected a small amount of Si. The obtained powder was treated in a 1:1 mixture of 50% hydrofluoric acid and 70% nitric acid at 70°C. The powder was then washed with water and dried to obtain the β-SiAlON powder according to Example 1. The repeated XRD measurement detected no diffraction peak other than that of the β-SiAlON.

Table 1 shows the conditions under which the β-SiAlON was manufactured in Examples and Comparative Examples, and the results of assessment of the β-SiAlON manufactured by that method.

**Table 1**

| | | Example | | | | Comparative Example | |
|---|---|---|---|---|---|---|---|
| | | 1 | 2 | 3 | 4 | 1 | 2 |
| Z value | | 0.1 | 0.1 | 0.08 | 0.06 | 0.25 | 0.1 |
| Eu | mass% | 0.50 | 0.56 | 0.55 | 0.41 | 0.68 | 0.70 |
| Al | | 0.91 | 0.91 | 0.76 | 0.59 | 2.39 | 0.95 |
| O | | 0.62 | 0.52 | 0.47 | 0.43 | 1.44 | 1.27 |
| Si | | 59.1 | 58.8 | 58.7 | 59.1 | 57.4 | 58.5 |
| N | | 38.8 | 39.1 | 39.4 | 39.3 | 37.9 | 38.5 |
| O/Al | molar ratio | 1.15 | 0.96 | 1.04 | 1.23 | 1.02 | 2.25 |
| N/Si | | 1.32 | 1.33 | 1.35 | 1.33 | 1.32 | 1.32 |
| D50 | µm | 6.0 | 6.2 | 6.0 | 5.1 | 0.65 | 0.62 |
| D90 | | 16.6 | 14.2 | 15.1 | 16.3 | 2.0 | 1.9 |
| Spin density | spins/g | 6.5 × 10¹⁷ | 2.1 × 10¹⁷ | 2.0 × 10¹⁷ | 2.4 × 10¹⁷ | 2.6 × 10¹⁸ | 2.5 × 10¹⁸ |
| Optical absorption coefficient | % | 50.9 | 58.0 | 48.7 | 45.2 | 22.6 | 23.5 |
| Peak luminescent intensity (%) | | 196 | 201 | 195 | 183 | 206 | 73 |
| Chromaticity x | | 0.336 | 0.332 | 0.327 | 0.319 | 0.356 | 0.308 |
| Chromaticity y | | 0.637 | 0.640 | 0.645 | 0.650 | 0.623 | 0.649 |

The optical absorptance of the powdered material obtained by the method according to Example 1 for 455 nm excitation wavelength was 50.9%. The optical absorptance was measured using an instantaneous multichannel photodetector (MCPD-7000, Otsuka Electronics Co. Ltd.)

The peak luminescent intensity of the β-SiAlON manufactured by the method according to Example 1 was 196%. To determine the luminescent properties, the fluorescent spectrum was measured using a fluorospectro photometer (F 4500, Hitachi High Technologies Corporation). The height of the peak wavelength of the fluorescent spectrum was measured using 455 nm blue light as excitation light, and a relative value with respect to the height of the peak wavelength measured using YAG: Ce: phosphor (P46-Y3, Mitsubishi Chemical Corporation) under the same conditions was found as the luminescent intensity. A spectral xenon lamp light source was used as the excitation light.

The CIE chromaticity x of the fluorescent spectrum of the β-SiAlON manufactured by the method according to Example 1 was 0.336, and the CIE chromaticity y of the same was 0.637. Using an instantaneous multichannel photodetector (MCPD-7000, Otsuka Electronics Co. Ltd.) and an integrating sphere, the fluorescent spectrum of the total luminous flux, namely the collection of fluorescent light generated by 455 nm excitation, was measured to find the fluorescent spectrum (see the Non-patent Literature 1).

### Example 2

In the powdered material according to Example 2, the z value calculated from its Al content was 0.1, the Eu content, Al content, O content, Si content, and N content thereof were respectively 0.56, 0.91, 0.52, 58.8, and 39.1 mass%, and the O/Al molar ratio and the N/Si molar ratio were 0.96 and 1.33 respectively.

The particle size and crystallinity of the powdered material were assessed in the same manner as Example 1. The particle size of the powdered material was found to be 6.2 µm in D50 and 14.2 µm in D90. The ESR measurement revealed that the spin density corresponding to the absorption g = 2.00 ± 0.02 of the powdered material was 2.1 × 10¹⁷ spins/g. The optical absorptance of the powdered material for the 455 nm excitation wavelength was 58.0%.

β-SiAlON was manufactured using the above-mentioned powdered material under the same conditions as those of Example 1.

Then, the phosphor was assessed in the same manner as Example 1. The peak luminescent intensity of the β-SiAlON manufactured in Example 2 was 201%, and its CIE chromaticity was as follows: x = 0.332, y = 0.640.

### Example 3

In the powdered material according to Example 3, the z value calculated from its Al content was 0.08, the Eu content, Al content, O content, Si content, and N content were respectively 0.55, 0.76, 0.47, 58.7, and 39.4 mass%, and the O/Al molar ratio and the N/Si molar ratio were 1.04 and 1.35 respectively.

The particle size and crystallinity of the powdered material were assessed in the same manner as Example 1. The particle size of the powdered material was found to be 6.0 µm in D50 and 15.1 µm in D90. The ESR measurement revealed that the spin density corresponding to the absorption g = 2.00 ± 0.02 of the powdered material was 2.0 × 10¹⁷ spins/g. The optical absorptance of the powdered material for the 455 nm excitation wavelength was 48.7%.

β-SiAlON was manufactured using the above-mentioned powdered material under the same conditions as those of Example 1.

Then, the phosphor was assessed in the same manner as Example 1.

The peak luminescent intensity of the phosphor using the β-SiAlON in Example 3 was 195%, and its CIE chromaticity was as follows: x = 0.327, y = 0.645.

### Example 4

In the powdered material according to Example 4, the z value calculated from its Al content was 0.06, the Eu content, Al content, O content, Si content, and N content were respectively 0.41, 0.59, 0.43, 59.1, and 39.3 mass%, and the O/Al molar ratio and the N/Si molar ratio were 1.23 and 1.33 respectively.

The particle size and crystallinity of the powdered material were assessed in the same manner as Example 1. The particle size of the powdered material was found to be 5.1 µm in D50 and 16.3 µm in D90. The ESR measurement revealed that the spin density corresponding to the absorption g = 2.00 ± 0.02 was 2.4 × 10¹⁷ spins/g. The optical absorptance of the powdered material for the 455 nm excitation wavelength was 45.2%.

β-SiAlON was manufactured using the above-mentioned powdered material under the same conditions as Example 1.

The phosphor was then assessed in the same manner as Example 1. The peak luminescent intensity of the β-SiAlON manufactured according to Example 4 was 183%, and its CIE chromaticity was as follows: x = 0.319, y = 0.650.

Comparative Examples will hereinafter be described.

### Comparative Example 1

As the powdered material according to Comparative Example 1, a mixture of α silicon nitride powder (E10 grade, O content = 1.17 mass%, UBE), aluminum nitride powder (F grade, O content = 0.84 mass%, TOKUYAMA), aluminum oxide powder (TM-DAR grade, TAIMEI CHRMICALS), and europium oxide powder (RU grade, Shin Etsu Chemical) were used. To prepare powdered material for β-SiAlON synthesis, 95.50 mass% silicon nitride powder, 3.32 mass% aluminum nitride power, 0.39 mass% aluminum oxide powder, and 0.79 mass% europium oxide powder were prepared in order that the z value calculated from the Al content in the powdered material became 0.25 and that the europium oxide powder accounted for 0.29 mol%. These powdered materials were mixed in order that particle size became different from that of Example 1. The β-SiAlON according to Comparative Example 1 was manufactured under the same conditions as those of Example 1 with the exception of the above-mentioned conditions.

The Eu content, Al content, O content, Si content, and N content of the powdered material in Comparative Example 2 were respectively measured to be 0.68, 2.39, 1.44, 57.4, and 37.9 mass%, and the O/Al molar ratio and the N/Si molar ratio were 1.32 and 1.32 respectively.

The particle size and crystallinity of the powdered material were assessed. The particle size of the powdered material was found to be 0.65 µm in D50 and 2.0 µm in D90. The ESR measurement revealed that the spin density of the powdered material corresponding to the absorption g = 2.00 ± 0.02 was 2.6 × 10¹⁸ spins/g. The optical absorptance for the 455 nm excitation wavelength was 22.6%.

The β-SiAlON was then assessed as a phosphor in the same manner as Example 1.

The peak luminescent intensity of the β-SiAlON according to Comparative Example 1 was 206%, and its CIE chromaticity was as follows: x = 0.356, y = 0.623. This demonstrated that although the β-SiAlON according to Comparative Example 1 had high luminescent intensity, its Al and O contents were high, hence its x value in CIE chromaticity was large, whereas its y value was small. It was found that with the β-SiAlON according to Comparative Example 1, reduction in luminescent wavelength and bandwidth were not achieved, unlike the β-SiAlON according to Examples 1 to 4.

### Comparative Example 2

To prepare powdered material for phosphor synthesis, 97.8 mass% silicon nitride powder, 1.5 mass% aluminum nitride power, and 0.77 mass% europium oxide powder were prepared in order that the z value calculated from the Al content in the powdered material became 0.1 and that the europium oxide powder accounted for 0.29 mol%. The obtained mixture was used as powdered material in order that particle size different from that in Example 1 was obtained. The β-SiAlON according to Comparative Example 2 was manufactured under the same conditions as those of Example 1 with the exception of the above-mentioned conditions.

The Eu content, Al content, O content, Si content, and N content of the powdered material were respectively measured to be 0.70, 0.95, 1.27, 58.5, and 38.5 mass%, and the O/Al molar ratio and the N/Si molar ratio were 2.25 and 1.32 respectively.

The particle size and crystallinity of the powdered material according to Comparative Example 2 were assessed. The particle size of the powdered material according to Comparative Example 2 was found to be 0.62 µm in D50 and 1.9 µm in D90. The ESR measurement revealed that the spin density corresponding to the absorption g = 2.00 ± 0.02 of the powdered material according to Comparative Example 2 was 2.5 × 10¹⁸ spins/g- The optical absorptance of the powdered material according to Comparative Example 2 for the 455 nm excitation wavelength was 23.5%.

The β-SiAlON was then assessed as a phosphor in the same manner as Example 1. The peak luminescent intensity of the β-SiAlON according to Comparative Example 2 was 73%, and its CIE chromaticity was as follows: x = 0.308, y = 0.649.

Since the Al content of the powdered material of the β-SiAlON according to Comparative Example 2 was low, x chromaticity value was low, whereas the y chromaticity value was high, meaning that reduction in wavelength and bandwidth has been achieved. To maintain charge balance in β-SiAlON crystal, it is necessary that the molar ratio between Al and O in the β-SiAlON is 1:1. According to Examples 1 to 4, to reduce the wavelength and bandwidth, the O and Al contents were decreased to lower the z value. In contrast, with the β-SiAlON according to Comparative Example 2, since the molar ratio of O to Al was 2.25, which is much higher than 1, due to impurity oxygen in the silicon nitride powder and the aluminum nitride power and the oxygen contained in the europium oxide, the luminescent efficiency decreased. Furthermore, due to small particle size and large crystal defects of the powdered material, the peak luminescent intensity was extremely low.

The luminescent intensity of the β-SiAlON in all of Examples 1 to 4 was high. In the luminescence in Examples 1 to 4, 0.319 < x < 0.336 and 0.637< y < 0.650 were satisfied in the CIExy chromaticity, meaning that reduction in wavelength and bandwidth has been achieved.

The β-SiAlON according to Examples 1 to 10 of the present invention is capable of emitting high-intensity green light using an ultraviolet LED or a blue LED emitting 350 to 500 nm light as an excitation light. Accordingly, by using the phosphor in the above experimental examples in combination with another phosphor, a white LED having favorable luminescent properties can be achieved.

### Industrial Applicability

A phosphor using the β-SiAlON of the present invention is excited by light having a wide range of wavelength from ultraviolet to blue, and emits green light having reduced wavelength and bandwidth at high luminescent efficiency. For this reason, the phosphor using the β-SiAlON of the present invention can be preferably used for white LED phosphors using blue or ultraviolet light as their light source, and is preferably applicable to white LEDs having a wide range of color reproducibility for liquid crystal display panel backlight.

The phosphor using the β-SiAlON of the present invention has advantages that the luminance rarely decreases at high temperatures, and it has superior heat resistance and moisture resistance. Accordingly, when applied to the above-mentioned industrial fields of lighting apparatus and image display devices, the phosphor of the present invention offers excellent performance, minimizing changes in brightness and luminescent color resulting from temperature change in the operating environment and ensuring high long-term stability.

## Claims

1. A method of manufacturing β-SiAlON represented by a general formula Si_{6-z}Al_{z}O_{z}N_{8-z}: Eu, comprising a baking step for baking a powdered material,
wherein, the powdered material contains Al content from 0.3 to 1.2 mass%, O content from 0.15 to 1 mass%, O/Al molar ratio from 0.9 to 1.3, Si content from 58 to 60 mass%, N content from 37 to 40 mass%, N/Si molar ratio from 1.25 to 1.45, and Eu content from 0.3 to 0.7 mass%;
the powdered material is baked in the baking step in a nitrogen atmosphere at temperatures from 1850°C to 2050°C; and 0.280 ≤ x ≤ 0.340 and 0.630 ≤ y ≤ 0.675 are satisfied on a CIExy chromaticity coordinate by the manufactured β-SiAlON.

2. The method of manufacturing the β-SiAlON as set forth in claim 1, wherein part or all of the powdered material is β-SiAlON, and the optical absorptance of the powdered material for 455 nm excitation wavelength is equal to or higher than 40%.

3. The method of manufacturing the β-SiAlON as set forth in claim 1 or 2, wherein the particle size of the powdered material is equal to or larger than 1 µm but not exceeding 12 µm in D 50, and equal to or smaller than 20 µm in D90.

4. The method of manufacturing the β-SiAlON as set forth in claim 1 or 2, wherein the spin density corresponding to absorbance g = 2.00 ± 0.02 obtained by electron spin resonance spectrum measurement of the powdered material at 25°C is equal to or lower than 9.0 × 10¹⁷ spins/g.

5. The method of manufacturing the β-SiAlON as set forth in claim 1 or 2, further includes an annealing step after the baking step, wherein heat treatment of the annealing step is performed in vacuum at temperatures from 1200°C to 1550°C, or heat treatment is performed in an inert atmosphere, whose main component being any of inert gases other than nitrogen and nitrogen partial pressure therein being maintained at 10kPa or lower, at temperatures from 1300°C to 1600°C, or both.

6. The method of manufacturing the β-SiAlON as set forth in claim 1 or 2, further includes an acid treatment step after the baking step or the annealing step, wherein the β-SiAlON is immersed in an aqueous solution at 65° C or higher containing HF and HNO₃ in the acid treatment step.

7. The method of manufacturing the β-SiAlON as set forth in claim 3, wherein the spin density of the powdered material obtained by electron spin resonance spectrum measurement corresponding to absorption g = 2.00 ± 0.02 at 25°C is equal to or lower than 9.0 × 10¹⁷ spins/g.

## Patentansprüche

1. Verfahren zur Herstellung von β-SiAlON, dargestellt durch eine allgemeine Formel Si_{6-z}Al_{z}O_{z}N_{8-z}: Eu, umfassend einen Brennschritt zum Brennen eines pulverisierten Materials,
wobei das pulverisierte Material einen Al-Gehalt von 0,3 bis 1,2 Masse%, einen O-Gehalt von 0,15 bis 1 Masse%, ein O/Al-Molverhältnis von 0,9 bis 1,3, einen Si-Gehalt von 58 bis 60 Masse%, einen N-Gehalt von 37 bis 40 Masse%, ein N/Si-Molverhältnis von 1,25 bis 1,45 und einen Eu-Gehalt von 0,3 bis 0,7 Masse% enthält;
das pulverisierte Material in dem Brennschritt in einer Stickstoffatmosphäre bei Temperaturen von 1.850 °C bis 2.050 °C gebrannt wird; und
0,280 ≤ x ≤ 0,340 und 0,630 ≤ y ≤ 0,675 auf einer CIExy-Chromatizitätskoordinate durch das hergestellte β-SiAlON erfüllt sind.

2. Verfahren zur Herstellung des β-SiAlONs nach Anspruch 1, wobei ein Teil des oder das gesamte pulverisierte(n) Material(s) β-SiAlON ist und der optische Absorptionsgrad des pulverisierten Materials für 455 nm Anregungswellenlänge gleich oder höher als 40 % ist.

3. Verfahren zur Herstellung des β-SiAlONs nach Anspruch 1 oder 2, wobei die Teilchengröße des pulverisierten Materials in D50 gleich oder größer als 1 µm ist, aber nicht über 12 µm liegt, und in D90 gleich oder kleiner als 20 µm ist.

4. Verfahren zur Herstellung des β-SiAlONs nach Anspruch 1 oder 2, wobei die Spindichte, entsprechend einer Absorbanz g = 2,00 ± 0,02, erhalten durch Elektronenspinresonanzspektrummessung des pulverisierten Materials bei 25 °C, gleich oder geringer als 9,0 x 10¹⁷ Spins/g ist.

5. Verfahren zur Herstellung des β-SiAlONs nach Anspruch 1 oder 2, das ferner einen Temperschritt nach dem Brennschritt beinhaltet, wobei die Wärmebehandlung des Temperschritts im Vakuum bei Temperaturen von 1.200 °C bis 1.550 °C erfolgt oder die Wärmebehandlung in einer inerten Atmosphäre, deren Hauptbestandteil ein beliebiges anderes Inertgas als Stickstoff ist und in welcher der Stickstoffpartialdruck bei 10 kPa oder weniger gehalten wird, bei Temperaturen von 1.300 °C bis 1.600 °C erfolgt, oder beides.

6. Verfahren zur Herstellung des β-SiAlONs nach Anspruch 1 oder 2, das ferner einen Säurebehandlungsschritt nach dem Brennschritt oder dem Temperschritt beinhaltet,
wobei das β-SiAlON in dem Säurebehandlungsschritt in eine wässrige Lösung von 65 °C oder höher getaucht wird, die HF und HNO₃ enthält.

7. Verfahren zur Herstellung des β-SiAlONs nach Anspruch 3, wobei die Spindichte des pulverisierten Materials, erhalten durch Elektronenspinresonanzspektrummessung, entsprechend einer Absorption g = 2,00 ± 0,02 bei 25 °C, gleich oder geringer als 9,0 x 10¹⁷ Spins/g ist.

## Revendications

1. Procédé de fabrication de SiAlON β représenté par une formule générale Si_{6-z}Al_{z}O_{z}N_{8-z},: Eu, comprenant une étape de cuisson pour cuire un matériau en poudre,
le matériau en poudre contenant une teneur en Al de 0,3 à 1,2 % massique, une teneur en O de 0,15 à 1 % massique, le rapport molaire O/Al étant de 0,9 à 1,3, une teneur en Si de 58 à 60 % massique, une teneur en N de 37 à 40 % massique, le rapport molaire N/Si étant de 1,25 à 1,45, et une teneur en Eu de 0,3 à 0,7 % massique ;
le matériau en poudre étant cuit au cours d'une étape de cuisson dans une atmosphère azotée à des températures de 1 850 °C à 2 050 °C ; et
0,280 ≤ x ≤ 0,340 et 0,630 ≤ y ≤ 0,675 sont satisfaits par le SiAlON β fabriqué, sur un diagramme de chromaticité CIExy.

2. Procédé de fabrication du SiAlON β selon la revendication 1, une partie ou la totalité du matériau en poudre étant du SiAlON β, et l'absorbance optique du matériau en poudre pour une longueur d'onde d'excitation de 455 nm étant égale ou supérieure à 40 %.

3. Procédé de fabrication du SiAlON β selon la revendication 1 ou 2, la taille de particule du matériau en poudre étant égale ou supérieure à 1 µm, mais ne dépassant pas 12 µm en D50, et égale ou inférieure à 20 µm en D90.

4. Procédé de fabrication du SiAlON β selon la revendication 1 ou 2, la densité de spin correspondant à une absorbance g = 2,00 ± 0,02 obtenue par mesure du spectre de résonance paramagnétique électronique du matériau en poudre à 25 °C étant égale à ou inférieure à 9,0 x 10¹⁷ spins/g.

5. Procédé de fabrication du SiAlON β selon la revendication 1 ou 2, comprenant en outre une étape de recuit après l'étape de cuisson, le traitement thermique de l'étape de recuit étant effectué sous vide à des températures de 1 200 °C à 1 550 °C, ou le traitement thermique étant effectué sous atmosphère inerte dont le composant principal est l'un quelconque des gaz inertes autre que l'azote, et la pression partielle d'azote y étant maintenue à 10 kPa ou moins, à des températures de 1 300 °C à 1 600 °C, ou les deux.

6. Procédé de fabrication du SiAlON β selon la revendication 1 ou 2, comprenant en outre une étape de traitement à l'acide après l'étape de cuisson ou l'étape de recuit,
le SiAlON β étant immergé dans une solution aqueuse à 65 °C ou plus contenant du HF et du HNO₃ au cours de l'étape de traitement à l'acide.

7. Procédé de fabrication du SiAlON β selon la revendication 3, la densité de spin du matériau en poudre obtenue par mesure du spectre de résonance paramagnétique électronique correspondant à une absorbance g = 2,00 ± 0,02 à 25 °C étant égale à ou inférieure à 9,0 x 10¹⁷ spins/g.
